# EUROPÄISCHE PATENTSCHRIFT

(11) **EP 1 792 107 B1**
(45) Veröffentlichungstag und Bekanntmachung des Hinweises auf die Patenterteilung: **19.03.2008**
(21) Anmeldenummer: 05778560.2
(22) Anmeldetag: 17.08.2005
(51) Int. Cl.: F16H 61/22, B60R 25/06

(54) **VERFAHREN ZUM NOTENTSPERREN EINES AUTOMATIKGETRIEBES**
METHOD FOR UNLOCKING AN AUTOMATIC TRANSMISSION IN AN EMERGENCY
PROCEDE POUR DEVERROUILLER EN URGENCE UNE TRANSMISSION AUTOMATIQUE

(30) Priorität: 02.09.2004 DE 102004042417
(43) Veröffentlichungstag der Anmeldung: 06.06.2007
(73) Patentinhaber: Bayerische Motoren Werke Aktiengesellschaft, 80809 München (DE)
(72) Erfinder: JAEGERS, Thomas, 86916 Kaufering (DE); GIELISCH, Frank, 85757 Karlsfeld (DE); ANDRES, Rainer, 81245 München (DE)
(86) Internationale Anmeldenummer: PCT/EP2005/008923
(87) Internationale Veröffentlichungsnummer: WO 2006/024398

(56) Entgegenhaltungen:
- DE-A1- 10 128 430
- DE-A1- 10 140 164
- DE-A1- 10 241 877
- DE-A1- 10 259 893
- DE-C1- 4 317 257
- DE-C1- 19 920 095

## Beschreibung

Die Erfindung bezieht sich auf ein Verfahren zum Notensperren eines Automatikgetriebes eines Fahrzeugs nach dem Oberbegriff des Patentanspruchs 1. Ein Solches Verfahren ist aus der DE 102 41 877 A1 bekannt.

Eine Vorrichtung zum Schutz eines Fahrzeugs vor unbefugtem Benutzen ist beispielsweise aus der DE 101 22 164 A1 bekannt. Hierbei wird ein Gangwahlhebel bei ausgeschaltetem Fahrzeug in einer betätigungsgesperrten Position verriegelt. Selbst bei unbefugtem Anlassen des Motors, zum Beispiel durch Kurzschließen der Zündung, ist kein Fahren des Fahrzeugs möglich ist, weil der Gangwahlhebel in einer betriebsgesperrten Position ist. Aus dieser betriebsgesperrten Position kann der Gangwahlhebel nur mit einem Zündschlüssel entriegelt werden.

Weiter sind Fahrzeuge mit Automatikgetriebe bekannt, bei denen automatisch in die Parkposition geschaltet wird, sobald der Motor abgestellt ist, es sei denn das Getriebe ist in Neutralstellung und der Schlüssel oder ein anderes Identifizierungsmittel steckt im Zündschloss. Ohne erneute Identifizierung kann das Getriebe in keinen anderen Zustand bzw. in keine andere Betriebsart gebracht werden. Kann sich der Fahrer nicht mehr identifizieren, weil er beispielsweise seinen Schlüssel oder seine Identifizierungskarte verloren hat oder das Fahrzeug defekt ist, muss das Automatikgetriebe zum Abschleppen manuell mittels einer Notenriegelungseinheit entriegelt werden, da ansonsten die Antriebsräder blockieren würden. Wird mittels der Notentriegelungseinheit das Getriebe entsperrt, kann das Getriebe in alle Betriebszustände, auch in einen Fahrbetriebszustand geschaltet werden.

Aufgabe der Erfindung ist, ein Verfahren zum Notentsperren eines Automatikgetriebes anzugeben, welches einen verbesserten Schutz vor unautorisiertem Benutzen des Fahrzeugs bietet.

Diese Aufgabe wird erfindungsgemäß durch ein Verfahren nach Patentanspruch 1 gelöst. Vorteilhafte Weiterbildungen sind die Gegenstände der abhängigen Ansprüche.

Das erfindungsgemäße Verfahren zum Notentsperren eines Automatikgetriebes eines Fahrzeugs aus einem zum Schutz vor unautorisiertem Benutzen gesperrten Zustand mittels einer Notentriegelungseinheit, zeichnet sich dadurch aus, dass bei Betätigung der Notentriegelungseinheit das Automatikgetriebe nicht in einem Vorwärts-Fahrbetrieb betrieben werden kann.

Der gesperrte Zustand des Fahrzeugs liegt beispielsweise vor, wenn kein Benutzer des Fahrzeugs identifiziert werden kann und die Brennkraftmaschine aus ist. Die Identifizierung kann entweder durch ein Einstecken eines Schlüssels oder eines anderen ldentifizierungsmittels in das Zündschloss oder durch eine den Fahrer identifizierende Magnetkarte oder Sendeeinrichtung, die nicht direkt mit dem Fahrzeug verbunden sein muss, erfolgen. Ganz allgemein liegt soll ein gesperrter Zustand vorliegen, wenn keine Benutzung des Fahrzeugs gewollt ist. Solange sich das Fahrzeug in einem gesperrten Zustand befindet, ist das Automatikgetriebe, in der Regel in der Parkstellung, gesperrt und somit kein Gangwechsel möglich. Das Automatikgetriebe kann entweder über einen herkömmlichen Gangwahlhebel mechanisch, oder über Gangwahlschalter und ein Steuergerät elektrisch geschaltet werden. Muss nun beispielsweise das Fahrzeug aufgrund eines Brennkraftmaschinendefekts abgeschleppt werden und ist auch keine Identifizierung mehr möglich, kann mittels der Notentriegelungseinheit das Automatikgetriebe entsperrt werden. Erfindungsgemäß kann das Automatikgetriebe dann aber nicht im Vorwärts-Fahrbetrieb betrieben werden. Dementsprechend kann das Automatikgetriebe auch bei einem Wechsel in einen manuell schaltbaren Modus nicht im Vorwärts-Fahrbetrieb betrieben werden. Der Vorteil liegt darin, dass ein unautorisierter Benutzer des Fahrzeugs, der möglicherweise die Brennkraftmaschine ohne Identifizierungsmittel zwar vielleicht starten kann, trotzdem aber nicht wegfahren kann, selbst wenn er die Notentriegelungseinheit betätigt.

Vorteilhafterweise kann das Betreiben des Automatikgetriebes im Vorwärts-Fahrbetrieb mechanisch oder elektrisch verhindert werden, wobei der Vorteil bei einem elektrischen Verhindern darin liegt, dass keine zusätzliche mechanische Blockiervorrichtung im Fahrzeug vorhanden sein muss.

Vorteilhafterweise kann ein Betreiben des Automatikgetriebes in der Vorwärts-Fahrposition dadurch verhindert werden, dass ein im Fahrzeug vorhandener Gangwahlhebel bei Betätigung der Notentriegelungseinheit nicht in die Vorwärtsfahrposition bewegt werden kann. Der Gangwahlhebel kann beispielsweise mittels einer mechanischen Blockiereinrichtung daran gehindert werden, in die Vorwärts-Fahrposition bewegt zu werden. Kann der Gangwahlhebel nicht in die Vorwärts-Fahrposition bewegt werden, kann auch das die elektro-hydraulischen Ventile des Automatikgetriebes ansteuernde Steuergerät kein Vorwärts-Fahrsignal vom Gangwahlhebel erhalten und dementsprechend kein Ansteuersignal zum Betreiben des Automatikgetriebes im Vorwärts-Fahrbetrieb an das Automatikgetriebe aussenden.

In einer anderen Ausgestaltungsmöglichkeit kann ein Betreiben des Automatikgetriebes im Vorwärts-Fahrbetrieb auch dadurch verhindert werden, dass vorteilhafterweise das im Fahrzeug vorhandene Steuergerät zum Auswählen eines Fahrbetriebs beziehungsweise zum Ansteuern der elektro-hydraulischen Ventile des Automatikgetriebes bei Betätigung der Notentriegelungseinheit kein Signal zum Betreiben des Automatikgetriebes in einem Vorwärts-Fahrbetrieb senden kann. Würde das Steuergerät vom Gangwahlhebel ein Eingangssignal zu Betreiben des Automatikgetriebes im Vorwärts-Fahrbetrieb erhalten, würde es gemäß dieser Ausgestaltungsmöglichkeit die elektro-hydraulischen Ventile des Automatikgetriebes nicht ansteuern. Das Steuergerät könnte dann beispielsweise überhaupt keine Ansteuerung des Automatikgetriebes vornehmen oder eine derartige Ansteuerung vornehmen, als hätte es vom Gangwahlhebel ein Eingangssignal zum Betreiben des Automatikgetriebes im Parkbetrieb oder im Neutralbetrieb erhalten.

Vorteilhafterweise kann bei Betätigung der Notentriegelungseinheit das Automatikgetriebe auch nicht in einem Rückwärts-Fahrbetrieb betrieben werden. Diese vorteilhafte Ausgestaltung ist jedoch nur bei einer elektrischen Blockierung über das Steuergerät möglich, da beim mechanischen Blockieren des Gangwahlhebels dann überhaupt kein Schalten mehr möglich wäre, da in der Gangwahleinheit die Rückwärts-Fahrposition zwischen der Parkposition und der Neutralposition angeordnet ist. Das Getriebe könnte dann auch nicht mehr, wie es bei einem Abschlepp- oder Anschleppvorgang erforderlich ist, im Neutralbetrieb betrieben werden.

Vorteilhafterweise kann die Notentriegelungseinheit über einen Schließzylinder betätigt werden. Derartige Anforderungen sind in verschiedenen Ländern vorgeschrieben, um einen zusätzlich Schutz vor unautorisiertem Notentriegeln zu gewährleisten.

Im Folgenden wird die Erfindung anhand einer Zeichnung näher erläutert. Dabei zeigt
- Fig. 1: einen für das erfindungsgemäße Verfahren verwendete Vorrichtung,
- Fig. 2: eine alternative Vorrichtung zu Fig. 1 und
- Fig. 3: ein Ablaufdiagramm des erfindungsgemäßen Verfahrens.

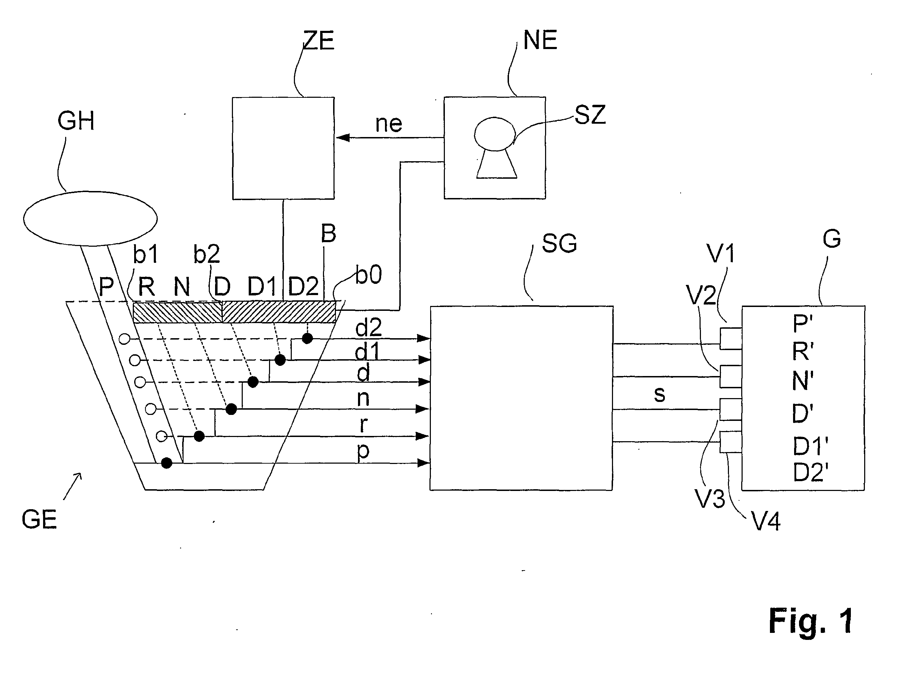

In Fig. 1 ist eine Gangwahlhebeleinheit GE dargestellt, die in Abhängigkeit von der Stellung des Gangwahlhebels GH unterschiedliche Signale p, r, n, d, d1, oder d2 an ein Getriebesteuergerät SG sendet. Das Getriebesteuergerät SG ist derart ausgestaltet, dass es in Abhängigkeit vom Eingangssignal (p, r, n, d, d1 oder d2) ein dazupassendes Ausgangssignal zum Ansteuern der elektrohydraulischen Ventile V1, V2, V3 und V4 des Automatikgetriebes G in eine der Betriebsarten P', R', N', D', D1' oder D2' erzeugt. Weiter ist die Gangwahleinheit GE mit einer Zustandserkennungseinheit ZE verbunden, die in Abhängigkeit vom Zustand des Fahrzeugs eine in der Gangwahlhebeleinrichtung GE vorhandene Blockiereinrichtung B in die Positionen b0, b1 oder b2 schaltet. Zusätzlich ist noch eine Notentriegelungseinheit NE vorhanden, die mit der Zustandserkennungseinheit ZE elektrisch und/oder mit der Getriebegangwahleinheit GE mechanisch verbunden ist und bei Betätigung ein Signal ne an die Zustandserkennungseinheit sendet und/oder direkt die Blockiereinrichtung B schaltet.

Im nicht gesperrten Zustand kann der Gangwahlhebel GH die Positionen P, R, N, D, D1 und D2 einnehmen, wobei P einer Parkposition, R einer Rückwärts-Fahrposition, N einer Neutralposition, D einer Vorwärts-Fahrposition und D1 und D2 speziellen Vorwärts-Fahrpositionen entspricht. Im nicht gesperrten Zustand ist die in der Gangwahlhebeleinrichtung GE vorhandene Blockiereinrichtung B ist in der Position b0.

Erkennt die Zustandserkennungseinrichtung ZE einen gesperrten Zustand des Fahrzeugs, da beispielsweise die Brennkraftmaschine aus ist und keine gültige Identifizierung eines Fahrers vorliegt, wird der Gangwahlhebel GH automatisch in die Position P und die Blockeinheit B in die gesperrte Position b1 geschaltet. Der gesperrte Zustand könnte beispielsweise aber auch dann vorliegen, wenn der Gangwahlhebel in der Parkposition ist, die Brennkraftmaschine aus ist und keine gültige Identifizierung eines Benutzers vorliegt. Der Gangwahlhebel GH kann im gesperrten Zustand nicht aus der Parkposition herausbewegt werden. Die Gangwahleinheit GE kann somit lediglich das Signal p an das Getriebesteuergerät SG senden. Dieses steuert darauf hin die Ventile V1 bis V4 des Automatikgetriebes G derart an, dass das Getriebe lediglich im Parkbetrieb P' betrieben werden kann.

Wird nun eine im Fahrzeug vorhandene Notentriegelungseinheit NE, die entweder direkt mit der Gangwahlhebeleinheit GE oder indirekt über die Zustandserkennungseinheit ZE mit der Gangwahlhebeleinheit GE verbunden ist, betätigt, wird die Blockiereinrichtung B trotz gesperrten Zustands des Fahrzeugs aus der gesperrten Position b1 in die halbentsperrte Position b2 geschaltet. Der Gangwahlhebel GH kann dadurch zwar in die Positionen P, R und N gebracht werden, allerdings nicht in die Vorwärts-Fahrpositionen D, D1 und D2. Somit kann das Automatikgetriebe G auch nicht in einem der Vorwärtsfahrbetriebe D', D1 oder D2 betrieben werden. Vorteilhafterweise wird die Notentriegelungseinheit NE über einen Schließzylinder SZ betätigt, um auch die Notentriegelungseinheit NE vor unbefugtem Benutzen zu schützen. Wird der gesperrte Zustand durch eine gültige Identifizierung und gestarteter Brennkraftmaschine wieder aufgehoben, wird die Blockiereinrichtung wieder in die entsperrte Position b0 geschaltet.

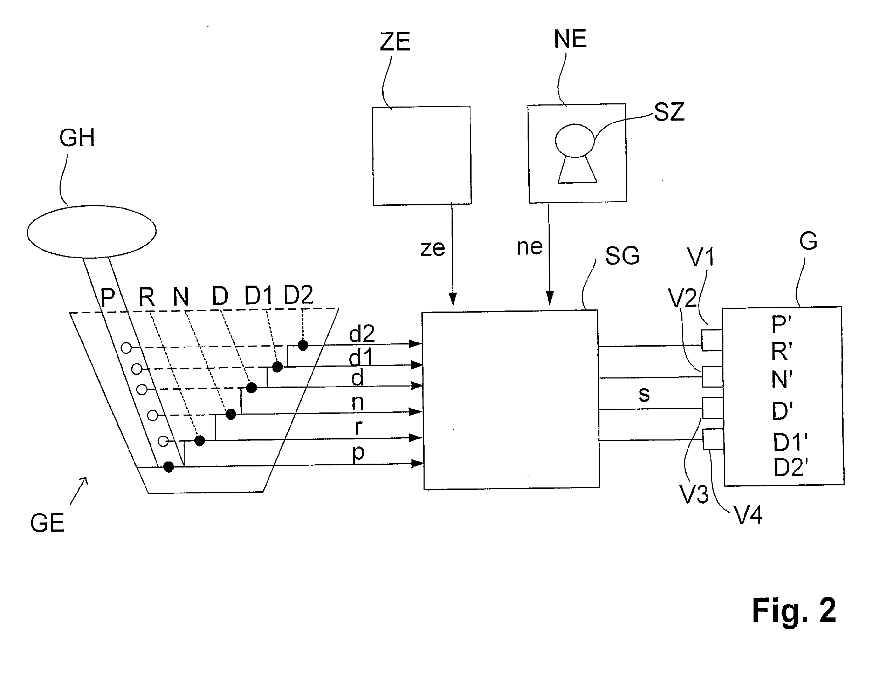

In der Fig. 2 ist eine alternative Vorrichtung zur Fig. 1 dargestellt. Bei dieser Vorrichtung wird das Sperren und Entsperren der jeweiligen Getriebebetriebsarten P', R', N', D', D1' und D2' des Automatikgetriebes G nur über das Getriebesteuergerät SG vorgenommen. Im Unterschied zur Fig. 1 ist in der Gangwahleinheit GE der Fig. 2 keine Blockiereinrichtung vorgesehen. Die Zustandserkennungseinheit ZE und die Notentriegelungseinheit NE sind direkt mit dem Getriebesteuergerät SG verbunden, wobei die Zustandserkennungseinheit ZE ein Signal ze an die Getriebesteuereinheit sendet, wenn das Fahrzeug im gesperrten Zustand ist. Die Notentriegelungseinheit NE sendet bei dessen Betätigung ein Signal ne an das Getriebesteuergerät SG. Vorteilhafterweise wird die Notentriegelungseinheit NE auch hier über einen Schließzylinder SZ betätigt, um auch die Notentriegelungseinheit NE vor unbefugtem Benutzen zu schützen.

Solange das Fahrzeug im entsperrten Zustand ist, also von der Zustandserkennungseinheit ZE kein Signal ze erhält, steuert das Getriebesteuergerät SG die Ventile V1 bis V4 des Automatikgetriebes G derart an, dass in Abhängigkeit von der Position des Gangwahlhebels GH das Automatikgetriebe G in der der Gangwahlhebelposition P, R, N, D, D1 oder D2 entsprechenden Betriebsart P', R', N', D', D1' oder D2' betrieben wird.

Liegt ein gesperrter Zustand des Fahrzeugs vor, sendet die Zustanderkennungseinheit ZE ein Signal ze an das Getriebesteuergerät SG. Das Getriebesteuergerät SG wertet darauf hin die Eingangssignale p, r, n, d, d1 und d2 von der Gangwahleinheit GE nicht mehr aus, sondern steuert die Ventile V1 bis V4 des Automatikgetriebes G derart an, dass das Automatikgetriebe G lediglich im Parkbetrieb P' betrieben werden kann.

Wird nun im gesperrten Zustand die Notentriegelungseinheit NE betätigt, sendet diese ein Signal ne an das Getriebesteuergerät SG. Das Getriebesteuergerät SG wertet darauf hin die Eingangssignale p, r, und n von der Gangwahleinheit GE aus, jedoch nicht die Eingangssignale d, d1 und d2, welche sich bei den Gangwahlhebelpositionen D, D1 und D2 ergeben. Bringt der Fahrzeugbenutzer beispielsweise den Gangwahlhebel GH im notentriegelten Zustand in die Position N, erhält das Getriebesteuergerät SG als Eingangssignal n. Darauf hin steuert das Getriebesteuergerät SG die Ventile V1 bis V2 des Automatikgetriebes G derart an, dass das Automatikgebtriebe G im Neutralbetrieb N' betrieben wird. Bringt der Fahrzeugbenutzer jedoch den Gangwahlhebel GH in die Position D und erhält das Getriebesteuergerät SG darauf hin als Eingangssignal d, wird dieses vom Getriebesteuergerät SG nicht ausgewertet. Je nachdem, wie das Getriebesteuergerät SG ausgestaltet ist, steuert es die Ventile V1 bis V4 des Automatikgetriebes G gar nicht an, wodurch das Automatikgetriebe G in der zuletzt eingestellten Betriebsart bleibt, oder es steuert die Ventile V1 bis V4 derart an, dass das Automatikgebtriebe G automatisch im Parkbetrieb P' oder im Neutralbetrieb N' betrieben wird. Vorteilhafterweise ist das Getriebesteuergerät SG derart ausgestaltet, dass es auch das von der Rückwärtsfahr-Position R des Gangwahlhebels GH gesendete Eingangssignal r nicht auswertet. Somit kann das Automatikgetriebe G lediglich im Parkbetrieb P' oder im Neutralbetrieb N' betrieben werden.

Die Fig. 1 und 2 stellen nur zwei beispielhafte Vorrichtungen für das erfindungsgemäße Verfahren da. Es wäre zum Beispiel auch denkbar, die Zustandserkennungseinheit ZE in das Steuergerät zu integrieren oder die Auswertung der Notentriegelungseinheit in die Zustandserkennungseinheit zu integrieren oder den Gangwahlhebel im gesperrten Zustand des Fahrzeugs mechanisch zu blockieren und bei Betätigung der Notentriegelungseinheit die mechanische Sperre aufzuheben und die Vorwärts-Fahrbetriebe lediglich über die Ansteuerung durch das Getriebesteuergerät zu verhindern. Diese Aufzählung ist aber bei weitem nicht vollständig, so dass eine Vielzahl weiterer Details durchaus abweichend von obiger Beschreibung gestaltet sein können, ohne den Inhalt der Patentansprüche zu verlassen.

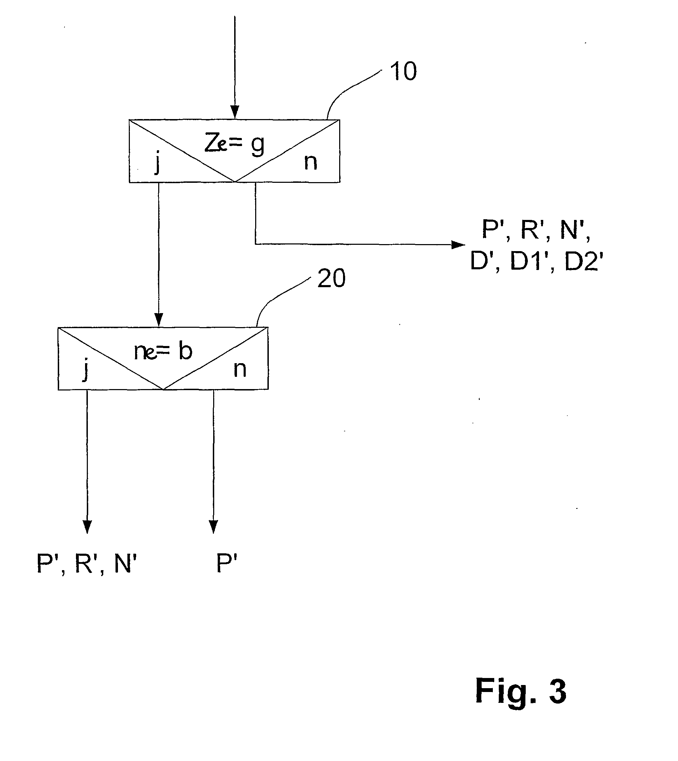

In der Fig. 3 ist ein Ablaufdiagramm des erfindungsgemäßen Verfahrens dargestellt.

In einem ersten Schritt 10 wird der Zustand des Fahrzeugs ausgewertet. Liegt kein gesperrter Zustand des Fahrzeugs vor, ist also ze = n, ist das Automatikgetriebe in alle Betriebsarten P' R', N', D', D1' und D2' frei schaltbar und der Ablauf des Verfahrens beginnt wieder von vorne im Schritt 10. Liegt jedoch ein gesperrter Zustand des Fahrzeugs vor, ist also ze = j, wird in einem nächsten Schritt 20 das Signal der Notentriegelungseinheit ausgewertet. Solange die Notentriegelungseinheit nicht betätigt wurde, also ne = n ist, kann das Automatikgetriebe nur im Parkbetrieb P' betrieben werden. Die Auswertung beginnt dann wieder im Schritt 10. Wird jedoch die Notentriegelungseinheit betätigt, so dass ne = j vorliegt, kann das Automatikgetriebe nicht in einem Vorwärts-Fahrbetrieb, also nicht in D', D1' oder D2' betrieben werden. Das Automatikgetriebe kann lediglich im Parkbetrieb P', im Rückwärts-Fahrbetrieb R' und im Neutralbetrieb N' betrieben werden. Vorteilhafterweise kann bei geeigneter Vorrichtung, wie zum Beispiel gemäß der Fig. 2, auch der Betrieb im Rückwärts-Fahrbetrieb R' verhindert werden.

## Patentansprüche

1. Verfahren zum Notentsperren eines Automatikgetriebes (G) eines Fahrzeugs aus einem zum Schutz vor unautorisiertem Benutzen gesperrten Zustand mittels einer Notentriegelungseinheit, (NE) **dadurch gekennzeichnet, dass** bei Betätigung (ne) der Notentriegelungseinheit (NE) das Automatikgetriebe (G) nicht in einem Vorwärts-Fahrbetrieb (D'; D1'; D2') betrieben werden kann.

2. Verfahren nach Patentanspruch 1, **dadurch gekennzeichnet, dass** das Betreiben des Automatikgetriebes (G) im Vorwärts-Fahrbetrieb (D'; D1'; D2') mechanisch oder elektrisch verhindert wird.

3. Verfahren nach Patentanspruch 1 oder 2, **dadurch gekennzeichnet, dass** ein im Fahrzeug vorhandener Gangwahlhebel (GH) bei Betätigung (ne) der Notentriegelungseinheit (NE) nicht in die Vorwärts-Fahrposition (D; D1; D2) zum Einlegen des Vorwärts-Fahrbetriebs (D'; D1'; D2') im Automatikgetriebe (G) bewegt werden kann.

4. Verfahren nach einem der vorangegangenen Patentansprüche, **dadurch gekennzeichnet, dass** ein im Fahrzeug vorhandenes Steuergerät (SG) zum Auswählen eines Fahrbetriebs (P'; R'; N'; D'; D1'; D2') des Automatikgetriebes (G) bei Betätigung (ne) der Notentriegelungseinheit (NE) kein Signal (s) zum Betreiben des Automatikgetriebes (G) im Vorwärts-Fahrbetrieb (D'; D1'; D2') an das Automatikgetriebe (G) senden kann.

5. Verfahren nach einem der vorangegangenen Patentansprüche, **dadurch gekennzeichnet, dass** bei Betätigung (ne) der Notentriegelungseinheit (NE) zusätzlich das Automatikgetriebe (G) nicht in einem Rückwärts-Fahrbetrieb (R') betrieben werden kann.

6. Verfahren nach einem der vorangegangenen Patentansprüche, **dadurch gekennzeichnet, dass** die Notentriegelungseinrichtung (NE) über einen Schließzylinder (SZ) betätigt wird.

## Claims

1. A method for the emergency unlocking of an automatic transmission (G) of a vehicle from a locked state to protect against unauthorised use by means of an emergency unlocking unit (NE), **characterised in that** on actuation (ne) of the emergency unlocking unit (NE) the automatic transmission (G) cannot be operated in a forward driving mode (D'; D1'; D2').

2. A method according to claim 1, **characterised in that** operation of the automatic transmission (G) in the forward driving mode (D'; D1'; D2') is prevented mechanically or electrically.

3. A method according to claim 1 or 2, **characterised in that** a gear selector lever (GH) present in the vehicle cannot be moved into the forward driving position (D; D1; D2) for engaging the forward driving mode (D'; D1'; D2') in the automatic transmission (G) on actuation (ne) of the emergency unlocking unit (NE).

4. A method according to any one of the preceding claims, **characterised in that** a control unit (SG) present in the vehicle for selecting a driving mode (P'; R'; N'; D'; D1'; D2') of the automatic transmission (G) on actuation (ne) of the emergency unlocking unit (NE) cannot send a signal (s) to operate the automatic transmission (G) in forward driving mode (D'; D1'; D2') to the automatic transmission (G).

5. A method according to any one of the preceding claims, **characterised in that** on actuation (ne) of the emergency unlocking unit (NE) the automatic transmission (G) can additionally not be operated in a reverse driving mode (R').

6. A method according to any one of the preceding claims, **characterised in that** the emergency unlocking device (NE) is actuated by a locking cylinder (SZ).

## Revendications

1. Procédé de déverrouillage de secours d'une transmission automatique (G) d'un véhicule automobile, à partir d'un état verrouillé prévu à titre de protection contre une utilisation non autorisée, en utilisant une unité de déverrouillage de secours NE,
**caractérisé en ce que**
quand l'unité de déverrouillage de secours (NE) est actionnée (ne), la transmission automatique G ne peut être amenée à fonctionner en marche avant (D', D1', D2').

2. Procédé selon la revendication 1,
**caractérisé en ce que**
le fonctionnement en marche avant (D' ; D1' ; D2') de la transmission automatique (G) est empêché mécaniquement ou électriquement.

3. Procédé selon la revendication 1 ou 2,
**caractérisé en ce que**
quand l'unité de déverrouillage de secours (NE) est actionnée (ne), le levier de sélection de rapport (GH) présent dans le véhicule ne peut être amené dans la position de marche avant (D ; D1' ; D2') de la transmission automatique (G).

4. Procédé selon une des revendications précédentes,
**caractérisé en ce que**
lors de l'actionnement (ne) de l'unité de déverrouillage de secours (NE), un appareil de commande (SG) présent dans le véhicule pour sélectionner un fonctionnement de circulation (P' ; R' ; N' ; D' ; D1' ; D2') de la transmission automatique (G), ne peut envoyer à celle-ci un signal (s) pour engager son fonctionnement en marche avant (D' ; D1' ; D2').

5. Procédé selon une des revendications précédentes,
**caractérisé en ce que**
lors de l'actionnement (ne) de l'unité de déverrouillage de secours (NE), la transmission automatique (G) ne peut être engagée dans un fonctionnement en marche arrière (R').

6. Procédé selon une des revendications précédentes,
**caractérisé en ce que**
l'unité de déverrouillage de secours (NE) est actionnée par un cylindre de serrure (SZ).
